# EUROPEAN PATENT SPECIFICATION

(11) **EP 2 499 794 B1**
(45) Date of publication and mention of the grant of the patent: **07.12.2016**
(21) Application number: 10830223.3
(22) Date of filing: 15.11.2010
(51) Int. Cl.: H04N 21/2343, H04N 21/235, H04N 21/2362, H04N 21/24, H04N 21/658, H04N 21/845

(54) **METHOD AND APPARATUS FOR TRANSMITTING AND RECEIVING DATA**
VERFAHREN UND VORRICHTUNG ZUM ÜBERTRAGEN UND EMPFANGEN VON DATEN
PROCÉDÉ ET APPAREIL PERMETTANT DE TRANSMETTRE ET DE RECEVOIR DES DONNÉES

(30) Priority: 13.11.2009 US 260906 P; 24.03.2010 US 316842 P; 25.03.2010 US 317280 P; 22.10.2010 KR 20100103725
(43) Date of publication of application: 19.09.2012
(73) Proprietor: Samsung Electronics Co., Ltd., Suwon-si, Gyeonggi-do, 443-742 (KR)
(72) Inventor: KWON, O-Hoon, Suwon-si Gyeonggi-do 443-773 (KR); HA, Ho-Jin, Suwon-si Gyeonggi-do 443-726 (KR); IM, Sung-Bin, Yongin-si Gyeonggi-do 446-938 (KR); ZHANG, Guanhua, Suwon-si Gyeonggi-do 443-725 (KR); KEUM, Ji-Eun, Suwon-si Gyeonggi-do 443-751 (KR)
(74) Representative: Jenkins, Richard Gavin
(86) International application number: PCT/KR2010/008068
(87) International publication number: WO 2011/059291

(56) References cited:
- KR-A- 20080 099 629
- KR-A- 20090 028 017
- KR-B1- 100 805 308
- US-A1- 2003 189 649
- US-A1- 2004 064 573
- Alex Zambelli: "IIS Smooth Streaming Technical Overview", , 31 March 2009 (2009-03-31), XP055009366, Retrieved from the Internet: URL:http://img.prodek.lt/documents/IIS_Smo oth_Streaming_Technical_Overview.pdf [retrieved on 2011-10-12]
- PANTOS R ET AL: "HTTP Live Streaming; draft-pantos-http-live-streaming-02.txt", HTTP LIVE STREAMING; DRAFT-PANTOS-HTTP-LIVE-STREAMING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 5 October 2009 (2009-10-05), XP015064407, [retrieved on 2009-10-05]
- JIN YOUNG LEE ET AL: "DASH Evaluation Experiment #1: Compositions of Media Presentation (CMP) Proposal Comparison", 94. MPEG MEETING; 11-10-2010 - 15-10-2010; GUANGZHOU; (MOTION PICTURE EXPERT GROUP OR ISO/IEC JTC1/SC29/WG11),, no. M18009, 28 October 2010 (2010-10-28), XP030046599,

## Description

### Technical Field

Methods and apparatuses consistent with exemplary embodiments relate to transmitting and receiving data, and more particularly, transmitting and receiving data by using information about a component included in media data.

### Background Art

Examples of a method of transmitting media data through a network include a downloading method and a streaming method. In the streaming method, a server transmits media data in real time, and a client reproduces the received media data in real time, and additional information about data to be received next may be acquired in advance.

In general, media data includes a plurality of components. A server stores a plurality of media data corresponding combinations of the plurality of components. When a user requests one piece of media data from among the plurality of media data, the server transmits the requested media data.

"IIS Smooth Streaming Technical Overview" by Alex Zambelli relates to HTTP-based adaptive streaming. It refers to a typical adaptive streaming environment segmenting video files based on 'Group of Pictures'.

### Disclosure of the Invention

### Solution to Problem

One or more aspects of the exemplary embodiments provide methods and apparatuses for transmitting and receiving data, and more particularly, methods and apparatuses for transmitting and receiving data together with information about components included in media data.

### Brief Description of Drawings

The above and/or other aspects will become more apparent by describing in detail exemplary embodiments thereof with reference to the attached drawings in which:
FIG. 1 is a diagram of a streaming system according to an exemplary embodiment;
FIGS. 2A and 2B are flowcharts for describing streaming methods according to exemplary embodiments;
FIG. 3 is a schema of a file including information about content, according to an exemplary embodiment;
FIG. 4A illustrates information for defining a plurality of media data, according to an exemplary embodiment;
FIG. 4B illustrates information about a header of media data, according to an exemplary embodiment;
FIG. 4C illustrates information about at least one segment included in each of a plurality of media data, according to an exemplary embodiment;
FIGS. 5A and 5B are flowcharts for describing streaming methods according to other exemplary embodiments;
FIG. 6 is a schema of a file including information about content, according to another exemplary embodiment;
FIG. 7 illustrates information about content according to an exemplary embodiment;
FIGS. 8A and 8B are schemas of a media presentation description according to exemplary embodiments;
FIGS. 9A through 9H illustrate media presentation descriptions according to exemplary embodiments;
FIGS. 10A through 10C each illustrate a plurality of media data according to exemplary embodiments;
FIGS. 11A and 11B are flowcharts for describing streaming methods according to other exemplary embodiments;
FIGS. 12A and 12C each illustrate a plurality of media data according to other exemplary embodiments;
FIG. 13 is a flowchart of an operating method in a data transmitting system, according to an exemplary embodiment;
FIG. 14 is a table showing component information, according to an exemplary embodiment;
FIG. 15 shows an example of information about media data, according to an exemplary embodiment;
FIG. 16 is a table showing component information, according to another exemplary embodiment;
FIG. 17 shows an example of information about media data, according to another exemplary embodiment;
FIG. 18 shows an example of information about media data, according to another exemplary embodiment;
FIG. 19 is a block diagram of a data transmitting apparatus according to an exemplary embodiment;
FIG. 20 is a block diagram of a data receiving apparatus according to an exemplary embodiment; and
FIG. 21 is a flowchart of a method of receiving data, according to an exemplary embodiment.

### Best Mode for Carrying out the Invention

Aspects of the exemplary embodiments disclosed herein are set out in the appended claims.

This application claims the benefit of U.S. Provisional Application No. 61/260,906, filed on November 13,2009, U.S. Provisional Application No, 61/316,842, filed on March 24,2010, and U.S. Provisional Application No. 61/317,280, filed on March 25, 2010, in the U.S. Patents and Trademark Office, and claims priority from Korean Patent Application No. 10-2010-0103725, filed on October 22,2010, in the Korean Intellectual Property Office.

For convenience of description, the terminologies used herein will now be simply defined.

Examples of content include audio informations, video information, audio-video information and data. A content Item may include a plurality of components that will be described later.

A component is a constituent of the content item such as audio information, video information, and subtitle information. For example, the component may be a subtitle stream written in a predetermined language, or a video stream obtained at a predetermined camera angle. The component may be referred to as a track or an elementary stream (ES) according to a container.

A content resource (e.g., various qualities, various bit rates, and various angles) is a content item that is provided from a plurality of representations in order to perform adaptive streaming on a content item, A service searching process may be referred to as the content resource. The content resource may include periods of at least one continuous time,

A period is a temporal section of the content resource.

Representation is a version (all components, or some components) of a content resource in a period. A plurality of representations may have different subsets of components, or different encoding parameters (e.g., a bit rate) of components. Throughout this specification, representation is referred to as media data, but may be referred to as any terminology for indicating data including at least one component.

A segment is a temporal section of representation indicated by the only content uniform resource locator (URL) in predetermined system layer format (TS, or MP4).

Hereinafter, the exemplary embodiments will be described more fully with reference to the accompanying drawings, in which the exemplary embodiments of the invention are shown.

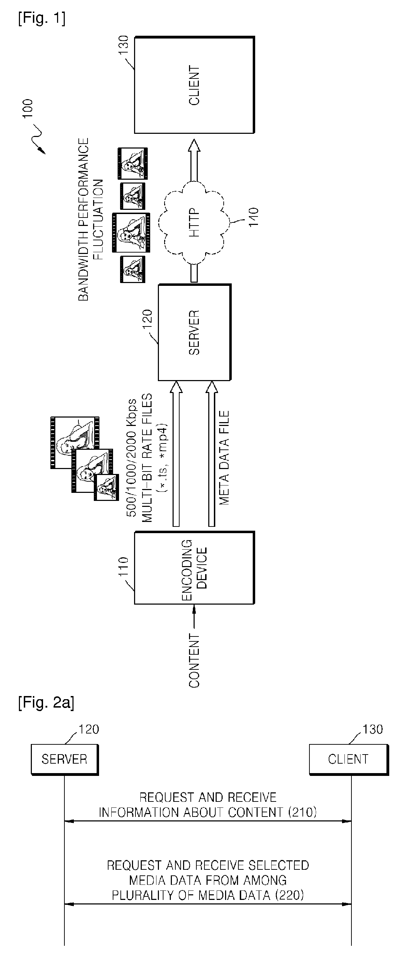

FIG. 1 is a diagram of a streaming system 100 according to an exemplary embodiment.

Referring to FIG. 1, the streaming system 100 according to the current exemplary embodiment includes an encoding device 110, a server 120, and a client 130.

The encoding device 110 generates a plurality of media data about one input content by encoding the input content to have a plurality of different qualities. However, a streaming environment may change when the server 120 streams media data to the client 130. For example, a bandwidth of a network 140 for streaming may be changed, or a hardware source that may be used by the server 120 to transmit media data or by the client 130 to receive media data may be changed.

Accordingly, the encoding device 110 encodes the one content to have different qualities for adaptive streaming according to a fluidic streaming environment. The one content may be encoded to have different qualities by adjusting a factor, such as a bit rate, a sampling frequency, resolution, or a frame rate. For example, a plurality of media data in 500 Kbps, 1000 Kbps, and 2000 Kbps may be generated by encoding one image content in different resolutions.

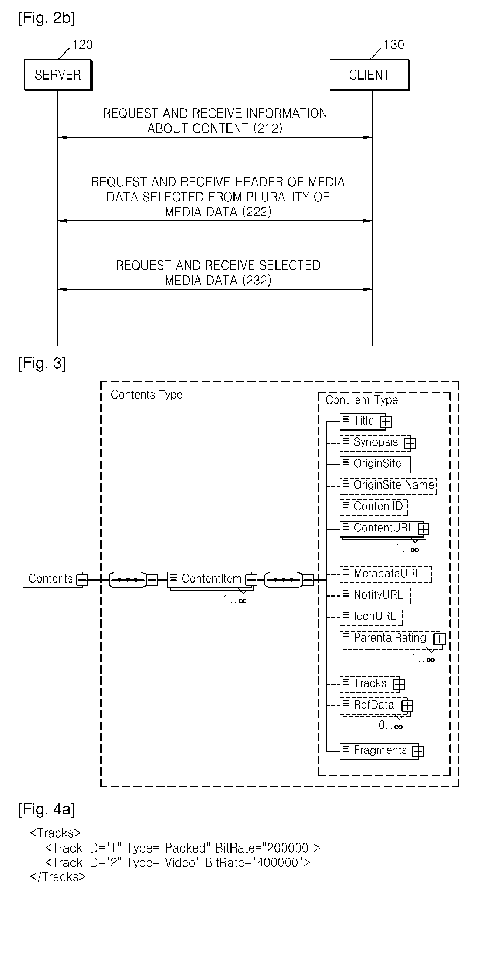

The plurality of media data in different qualities are transmitted to the server 120, and at this time, information about the content and information about each media data may also be transmitted to the server 120. The information about the content may include information about a title, a synopsis, a content identifier (ID), and a content uniform resource locator (URL) of the content as meta data of the content. The information about each media data may include a quality, a type, an ID, or the like of each media data, and will be described in detail with reference to FIGS. 4A through 4C.

The client 130 receives at least one of the information about content and information about each media data, and requests the server 120 for at least one of the plurality of media data, based on the received at least one of the information about content and information about each media data. The client 130 estimates a streaming environment, and selects at least one of the plurality of media data based on the estimated streaming environment. The at least one media data that may maintain a suitable quality of service (QoS) in the estimated streaming environment may be selected. Then, the client 130 may transmit a hypertext transfer protocol (HTTP) request for requesting the server 120 to transmit the selected at least one media data.

When a streaming environment is deteriorated, and high quality media data is available but continuous reproduction of media data is not possible, low quality media data may be requested from among a plurality of media data. When a streaming environment is improved and high quality media data is available and continuous reproduction of media data is possible, the high quality media data may continue to be requested from among a plurality of media data.

The client 130 may request the server 120 to transmit another media data while receiving a predetermined media data. For example, the client 130, which requested and was receiving first media data that is of low quality in a deteriorated streaming environment, may request the server 120 to transmit second media data that is of a higher quality than the first media data as the streaming environment improves. According to a related art streaming method, when the server 120 and the client 130 sets a quality while initially setting a streaming channel, media data is continuously transmitted and received having the same quality. However, according to the current exemplary embodiment, streaming that is adaptive to the streaming environment is possible since the client 130 is able to request the second media data again even while receiving the first media data about the same content.

The client 130 may estimate a streaming environment by using any method of estimating a streaming environment based on the bandwidth of the network 140 or the hardware resource that may be used by the server 120 or the client 130. For example, the client 130 may estimate the streaming environment based on a time stamp and a bit error rate (BER) of received media data. The streaming environment may be determined to be deteriorated when media data is received slower than a reproduction speed by checking time stamps of the received media data. Alternatively, the streaming environment may be determined to be deteriorated when BERs of the received media data are increased.

When the client 130 requests the server 120 to transmit at least one of the media data according to the streaming environment, the server 120 transmits the requested media data to the client 130. The server 120 may transmit the requested media data to the client 130 as an HTTP response to the HTTP request.

Each media data may include at least one of a plurality of segments generated by encoding content in different qualities and dividing the encoded content. In other words, each media data generated by encoding the content by the encoding device 110 may include at least one segment divided based on time. The server 120 transmits the content by dividing the content into the plurality of segments and respectively transmitting the plurality of segments, instead of encoding the content in one stream and continuously transmitting the content. The plurality of segments may be generated by dividing the content into predetermined time units, such as units of 10 or 20 seconds. The time that is the basis for dividing the content may be set based on a group of pictures (GOP). Media data corresponding to pictures of one or more GOPs may be set as one segment.

For example, when content is streamed having two qualities, the first media data may include at least one segment generated by encoding the content to have a first quality and dividing the encoded content based on time, and the second media data may include at least one segment generated by encoding the content to have a second quality and dividing the encoded content based on time.

The adaptive streaming is possible by dividing each media data based on time. For example, when streaming starts, the server 120 transmits a segment corresponding to 0 to 20 seconds of the first media data that is of low quality. Then, when it is determined that the streaming environment is improved after 20 seconds and the client 130 requests media data that is of higher quality, the server 120 may transmit a segment corresponding to 20 to 40 seconds of the second media data that is of the high quality. Since media data is divided into a plurality of segments based on time, segments of different media data may be transmitted according to a streaming environment, even during streaming.

FIG. 2A is a flowchart for describing a streaming method according to an exemplary embodiment.

Referring to FIG. 2A, the client 130 transmits a request to the server 120 to transmit information about predetermined content, in operation 210. In particular, when a user of the client 130 selects the predetermined content from a user interface displayed on a screen of the client 130, the client 130 requests the server 120 to transmit information about the selected content. The client 130 may transmit an HTTP request requesting the server 120 to transmit information about predetermined content.

Upon receiving the request from the client 130, the server 120 transmits the information about the predetermined content to the client 130. The server 120 may transmit the information about the predetermined content as an HTTP response to the HTTP request to the client 130. The information about the predetermined content may be a content access descriptor (CAD) according to an open internet protocol television (IPTV) forum (OIPF) standard. The information about the predetermined content will now be described in detail with reference to FIG. 3.

FIG. 3 is a schema of a file including information about content, according to an exemplary embodiment. The file may be a CAD, and may be an extensible Markup Language (XML) file. A tag and an attribute are separately described, but t an item defined by a tag can be defined by an attribute or an item defined by an attribute can be defined by a tag.

Referring to FIG. 3, the information about content may include "Title", "Synopsis", "OriginSite", and "ContentURL" tags.

Since the related art streaming of media data generates one media data by encoding one content to have a predetermined quality, related art information (specifically, CAD according to OIPF) about content does not include information about a plurality of media data generated by encoding the content to have different qualities.

However, the information about content, according to the current exemplary embodiment, includes information about a plurality of media data generated by encoding one content to have different qualities, and corresponds to "Tracks", "RefData", and "Fragments" tags in FIG. 3.

FIG. 4A illustrates information for defining a plurality of media data, according to an exemplary embodiment.

Referring to FIG. 4A, a "Tracks" tag is information for classifying a plurality of media data generated by encoding content to have different qualities. The "Tracks" tag includes an "ID" attribute, a "Type" attribute, and a "Bitrate" attribute assigned to each media data.

The "ID" attribute defines identifiers sequentially given to the plurality of media data, and the "Type" attribute defines whether media data corresponds to audio data, video data, video/audio data, or subtitle data. When the "Type" attribute is "Packed", the media data is video/audio data, and when the "Type" attribute is "Video", the media data is video data. The "Bitrate" attribute defines a bit rate used to encode the media data.

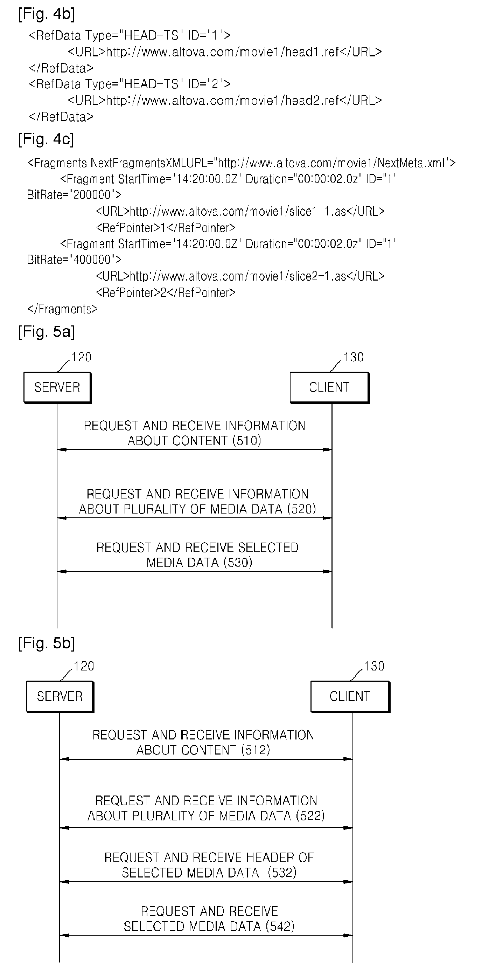

FIG. 4B illustrates information about a header of media data, according to an exemplary embodiment.

Referring to FIG. 4B, a "RefData" tag includes a "Type" attribute and an "ID" attribute. The "Type" attribute defines a media format of a header. For example, when the "Type" attribute is "HEAD-TS", the header is a header of a transport stream format. The "ID" attribute defines a media data of a header. When the "ID" attribute is "1", the header is a header of media data having a media data ID of "1". Also, the "RefData" tag includes information pointing to a header, and an "URL" tag defines a location of a header, i.e., a URL of a header.

The "RefData" tag is a selective element. The "RefData" tag is included in information about content only when a header is separated from media data and exists as a separate file, and may not be included in the information about content when the header is combined with the media data.

FIG. 4C illustrates information about at least one segment included in each of a plurality of media data, according to an exemplary embodiment.

Referring to FIG. 4C, a "Fragment" tag, which is a sub tag of a "Fragments" tag, includes the information about at least one segment included in each of the plurality of media data.

The "Fragments" tag includes a "NextFragmentsXMLURL" attribute. When following content is continuously streamed after streaming of one content is completed, such as in the case of live streaming, the following content may be seamlessly streamed only when the client 130 is aware of information about the following content. Accordingly, the "Fragments" tag defines the information about the following content as the "NextFragmentsXMLURL" attribute. URLs of the plurality of media data with respect to the following content may be defined as the "NextFragmentsXMLURL" attribute.

The "Fragment" tag includes information about at least one segment of current content. Referring to FIG. 4C, URL information of "slice1-1.as" constituting a first segment generated by encoding content in a first quality as first media data is defined by a "URL" tag, and an ID of a corresponding header is defined by a "RefPointer" tag. Also, a starting time of the first segment is defined by a "StartTime" attribute, and a duration time of each segment is defined by a "Duration" attribute. A quality of the first media data is defined by a "BitRate" attribute.

In FIG. 4C, the "Fragments" tag shows each media data including only one segment. However, as described above with reference to FIG. 1, when each media data is divided into a plurality of segments, one "Fragments" tag may include information about at least two segments.

Referring back to FIG. 2A, the client 130 requests the server 120 to transmit at least one of the plurality of media data, in operation 220. The plurality of media data are generated by encoding one content to have different qualities. The client 130 selects at least one media data encoded to have a quality suitable for a streaming environment from among the plurality of media data, and requests the server 120 for the selected at least one media data. The client 130 may transmit an HTTP request to the server 120 based on information about the plurality of media data, which is included in the information about the content.

As described with reference to FIG. 4C, the information about the content may include a "Fragments" tag. Accordingly, the client 130 requests the server 120 to transmit selected media data based on URL information included in the "Fragments" tag.

The server 120 transmits the media data according to the request of the client 130. The server 120 may transmit at least one segment of the requested media data to the client 130. The server 120 may transmit media data requested as an HTTP response with respect to an HTTP request to the client 130.

FIG. 2B is a flowchart for describing a streaming method according to another exemplary embodiment. FIG. 2B illustrates the streaming method when a header exists as a separate file from media data.

Referring to FIG. 2B, the client 130 requests the server 120 to transmit information about predetermined content, in operation 212, and the server 120 transmits the information about content. Operation 212 corresponds to operation 210 of FIG. 2A. The information about content including the "RefData" tag described above with reference to FIG. 4B is received.

In operation 222, the client 130 requests a header of selected media data from among a plurality of media data, based on the information about content received in operation 212. At least one media data suitable for a streaming environment is selected from among the plurality of media data based on the information about content received in operation 212, and a header of the selected at least one media data is requested. The header of the selected at least one media data is requested by referring to the "RefData" tag included in the information about content received in operation 212.

The server 120 transmits the requested header to the client 130. A header file may be transmitted to the client 130, and may be an XML file.

In operation 232, the client 130 requests the server 120 to transmit selected media data based on the information about content received in operation 212 and the header received in operation 222. The client 130 requests the server 120 to transmit at least one segment generated by dividing media data based on time, and the server 120 transmits the requested at least one segment to the client 130.

FIG. 5A is a flowchart for describing a streaming method according to another exemplary embodiment.

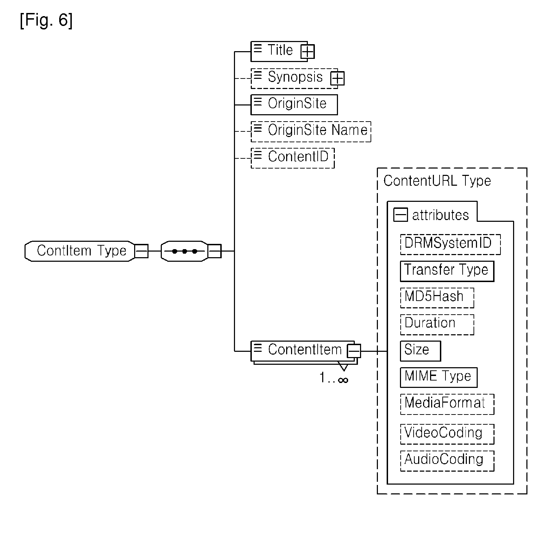

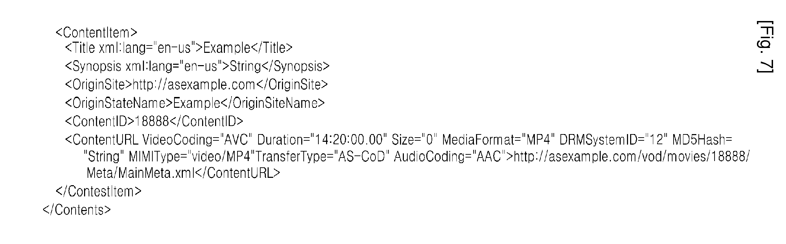

Referring to FIG. 5A, the client 130 requests the server 120 to transmit information about predetermined content, in operation 510, and the server 120 transmits the information about content. The client 130 transmits an HTTP request for requesting the server 120 to transmit the information about content, and receives the information about content as an HTTP response to the HTTP request. The information about content may be an XML file. The information about content received by the client 130 in operation 510 differs from the information about content received by client 130 in operation 210 of FIG. 2, and the differences will be described with reference to FIGS. 6 and 7.

FIG. 6 is a schema of a file including information about content, according to another exemplary embodiment.

Referring to FIG. 6, the information about content according to the current exemplary embodiment may include "Title", "Synopsis", "OriginSite", and "ContentURL" tags like FIG. 3.

However, in FIG. 3, the information about content includes the information about the plurality of media data by including the "Tracks", "RefData", and "Fragments" tags, whereas in FIG. 6, instead of including the information about the plurality of media data, the information about content only defines a URL of a file (hereinafter, referred to as a media presentation description) including the information about the plurality of media data. The "ContentURL" tag may define the URL of the media presentation description.

Compatibility with various media data formats may be maintained while performing streaming that is adaptive to a streaming environment by inserting the URL of the media presentation description into the information about content as shown in FIG. 6, without largely changing the related art schema of the file containing the information about content.

As shown in FIG. 6, the information about content may only include information related to the streaming method, and not include the information about the plurality of media data. In other words, the "ContentURL" tag may include a "MediaFormat" attribute defining a format of media data used during streaming, and a "MIMEType" attribute defining a type of media data.

Specifically, the "ContentURL" tag may include a "TransferType" attribute which defines a service to which streaming of content is related. The "TransferType" attribute may define whether the streaming of content is related to a Content on Delivery (CoD) service, a live service, an adaptive streaming live service, or an adaptive streaming CoD service.

FIG. 7 illustrates information about content according to an exemplary embodiment. FIG. 7 may be a CAD according to the OIPF standard.

Referring to FIG. 7, the information about content generated according to the schema of FIG. 6 may define a URL of a media presentation description in a "ContentURL" tag. http://asexample.com/vod/movies/18888/Meta/MainMeta.xml is the URL of the media presentation description. Also, as described with reference to FIG. 6, the "MediaFormat" attribute, the "MIMEType" attribute, and the "TransferType" attribute may be defined in the "ContentURL" tag.

Referring back to FIG. 5A, in operation 520, the client 130 requests the server 120 for the information about the plurality of media data, based on the information about content received in operation 510. The client 130 may request a media presentation description to the server 120 through an HTTP request, and may receive the media presentation description as an HTTP response.

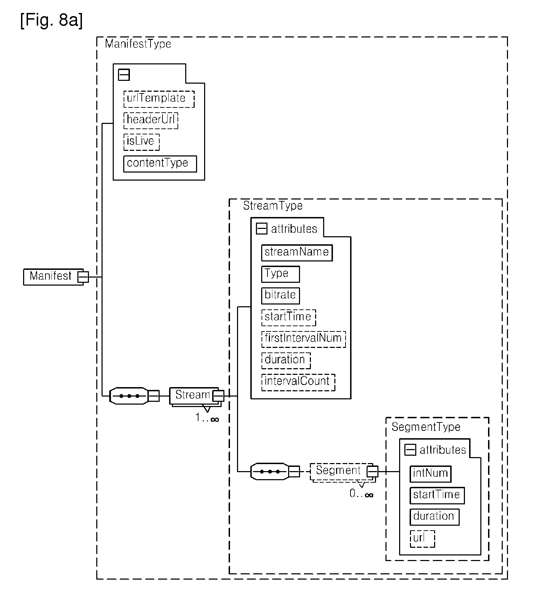

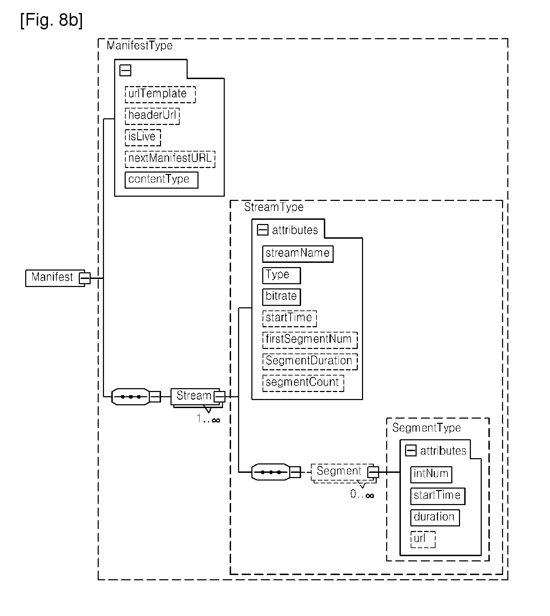

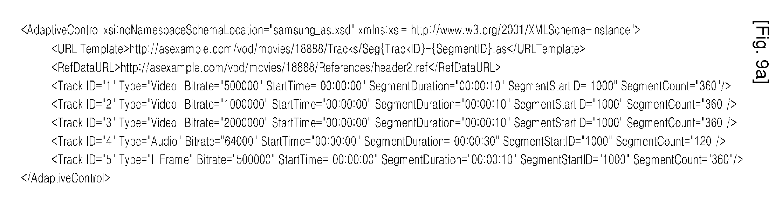

The information about content received by the client 130 from the server 120 in operation 510 may include the URL of the media presentation description as described with reference to FIGS. 6 and 7, and thus the client 130 requests and receives the media presentation description from the server 120 by referring to the "ContentURL" tag of the information about content. The media presentation description will now be described in detail with reference to FIGS. 8A and 8B, and FIGS. 9A through 9H.

FIGS. 8A and 8B are schemas of a media presentation description according to exemplary embodiments. The media presentation description may comply with the OIPF standard.

Referring to FIG. 8A, the media presentation description according to the current exemplary embodiment includes a template tag about URLs of a plurality of media data, a tag for defining a location of a header, a tag for defining to which service the streaming is related to, a tag for defining a container format of media data, and a tag for defining the plurality of media data.

An "urlTemplate" tag defines a common portion of the URLs of the plurality of media data. For example, if "http://example.com/vod/movie/18888/Track/{TrackID/ Segments/ SegmentID}" is a URL template, a URL of media data may be defined by respectively substituting an ID of each media data and an ID of at least one segment included in each media data for "TrackID" and "SegmentID".

A "headerUrl" tag corresponds to the "RefData" tag described with reference to FIG. 4B. In other words, the "headerUrl" tag defines URLs of headers of the plurality of media data.

An "isLive" tag defines a service related to streaming. For example, when the "isLive" tag is defined as "Live", the streaming is related to a live service, and when the "isLive" tag is defined as "CoD", the streaming is related to a CoD service.

A "contentType" tag defines a container format of media data used during streaming. The "contentType" tag may indicate whether the container format is an MP4 format or an MPEG2-TS format. The container format is an MP4 format or an MPEG2-TS format herein. However, any container format for transmitting media data may be used. For example, the "contentType" tag may define that the container format complies with an MPEG Media Transport (MMT) standard.

A "Stream" tag is generated for each media data and defines each media data. In order to define each media data generated by encoding one content to have different qualities, the "Stream" tag includes a "streamName" attribute, a "type" attribute, a "bitrate" attribute, a "startTime" attribute, a "firstIntervaINum" attribute, a "duration" attribute, and an "intervalCount" attribute.

The "streamName" attribute defines a name of media data, and may be an ID of media data. The "type" attribute defines a type of media data, wherein it is defined whether the media data is audio data, video data, or audio/video data. When media data only includes data about an I-frame for a trick play, such information may be defined in the "type" attribute.

The "Bitrate" attribute defines a bit rate of media data, the "startTime" attribute defines a time stamp for specifying a starting time of media data, and the "firstIntervalNum" attribute defines a number of a segment that initially starts.

The "duration" attribute defines a duration time of a segment included in media data, and the "intemalCount" attribute defines a total number of at least one segment included in media data.

The "Segment" tag is a sub tag of the "Stream" tag, and as described above, when media data includes at least one segment generated by encoding content in a predetermined quality and dividing the encoded content based on time, each of the at least one segment is defined.

The "IntNum" attribute defines a number of a segment, and the "StartTime" tag defines a starting time of a corresponding segment. The "Duration" tag defines a duration time of a corresponding segment, and the "url" defines a URL of a corresponding segment.

The "Segment" tag is a selective tag, and may not be included in the media presentation description if the information about at least one segment included in the media data can be inferred from other attributes of the "Stream" tag. In other words, when content of the "Segment" tag can be inferred from the "startTime", "firstIntervalNum", "duration", and "intervalCount" attributes defined in the "Stream" tag, the "Segment" tag need not be included in the media presentation description. Also, a "url" attribute of the "Segment" tag may not be required if a predetermined template is defined in the "urlTemplate", and the URLs of segments are inferred by substituting each ID of the plurality of media data and an ID of at least one segment included in each media data with the defined predetermined template.

However, on the other hand, attributes of the "Segment" tag are separately defined for each segment, if the attributes of the "Segment" tag cannot be inferred from other attributes of the "Stream" tag. The attributes of the "Segment" tag may not be inferred if duration times of segments are different. When duration times are different, the duration times of segments included in media data cannot be inferred from the attributes of the "Stream" tag, and thus the duration times of the segments may be each set by using a "duration" attribute of the "Segment" tag. When the duration times of the segments are different, starting times of continuous segments are also different. For example, when a duration time of a first segment of first media data is different from a duration time of a second segment of the first media data, a starting time of the second segment and a starting time of a third segment cannot be inferred from the "Stream" tag. Accordingly, a starting time of each segment may be defined by a "startTime" attribute.

The duration times and/or starting times may be defined by using a sub tag of the "Segment" tag, instead of using the "duration" attribute and the "startTime" attribute of the "Segment" tag. For example, a "Url" tag constituting a sub tag of the "Segment" tag may be set, and a duration time may be defined as an attribute of the "Url" tag, such as "<Url = www.example.com/∼/segment.ts, duration= 10/>".

According to another exemplary embodiment, duration time may be defined based on a difference between duration times of continuous segments. An upper tag may define a default duration time, and the "Url" tag constituting the sub tag may define only a difference between the default duration time and an actual duration time for each segment. As described above, the "Url" tag constituting the sub tag of the "Segment" tag may be defined as "<Url = www.example.com/∼/segment.ts, duration=difference/>". "Difference" denotes a difference between the default duration time and the actual duration time.

When a default duration time of a corresponding segment is defined to be 10 minutes by using the "Stream" tag or the "Segment" tag, and the "Url" tag constituting the sub tag is defined to be "<Url = www.example.com/-/segment.ts, duration=2/>", a duration time of the corresponding segment may be defined to be 10+2=12 minutes.

Referring to FIG. 8B, the media presentation description according to another exemplary embodiment may further include a "nextManifestURL" tag. As described above, when following content is continuously streamed after streaming of one content is completed, such as in the case of live streaming or advertisement insertion, the client 130 requires to pre-know information about the following content so as to stream the following content seamlessly. Accordingly, a URL of a media presentation description of the following content to be streamed after current content may be defined by the "nextManifestURL" tag.

FIGS. 9A through 9H illustrate media presentation descriptions according to exemplary embodiments.

Referring to FIG. 9A, the media presentation description according to an exemplary embodiment includes a "URLTemplate" tag, a "RefDataURL" tag, and a plurality of tags respectively defining a plurality of media data.

The "URLTemplate" tag and the "RefDataURL" tag of FIG. 9A respectively correspond to the "urlTemplate" tag and the "RefDataURL" tag of FIGS. 8A and 8B.

An "ID" attribute, a "Type" attribute, a "BitRate" attribute, a "StartTime" attribute, a "SegmentDuration" attribute, a "SegmentStartID" attribute, and a "SegmentCount" attribute of FIG. 9A respectively correspond to the "streamName" attribute, the "type" attribute, the "bitrate" attribute, the "startTime" attribute, the "duration" attribute of the "Stream" tag, the "firstIntervalNum" attribute of the "Stream" tag, and the "intervalCount" attribute of FIGS. 8A and 8B.

The media presentation description of FIG. 9A includes information about three video data generated by encoding content to have different qualities, information about one audio data, and information about media data generated by encoding only I-frames for a trick play.

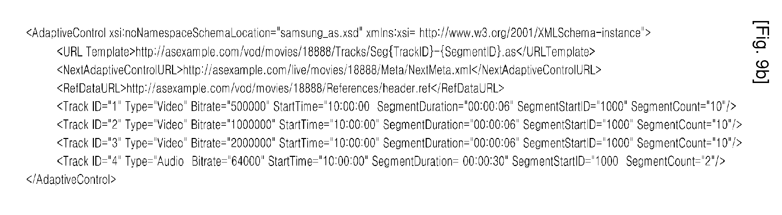

Referring to FIG. 9B, the media presentation description according to an exemplary embodiment further includes a "NextAdaptiveControlURL" tag. The "NextAdaptiveControlURL" tag corresponds to the "nextManifestURL" tag of FIG. 8B. Accordingly, a URL of a media presentation description of following content to be reproduced after current content may be defined by the "NextAdaptiveControlURL" tag.

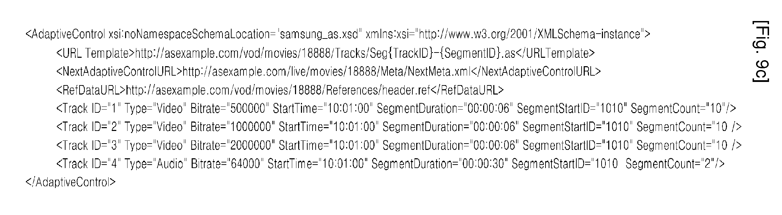

FIG. 9C shows a media presentation description of the following content, when the URL of the media presentation description of the following content to be reproduced after the current content is defined by the "NextAdaptiveControlURL" tag of FIG. 9B. Comparing the media presentation descriptions of FIGS. 9B and 9C, a "StartTime" attribute is different from the media presentation description of the current content of FIG. 9B, since the media presentation description of FIG. 9C is for the following content.

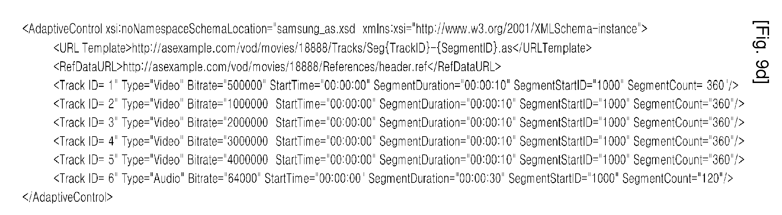

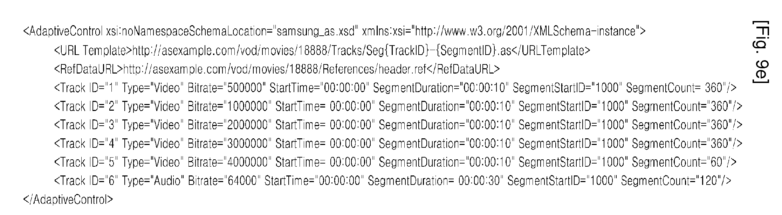

FIGS. 9D and 9E illustrate media presentation descriptions for selectively controlling high quality video reproduction that a user wants to perform. FIG. 9D illustrates the media presentation description when a plurality of media data are generated by encoding one content to have 5 different qualities. Here, the media presentation descriptions of FIGS. 9D and 9E are different in a tag including information about video encoded to have high quality, i.e., a "StartTime" attribute and a "SegmentCount" attribute of media data having an "ID" attribute of "5".

The server 120 selectively transmits the media presentation description of FIG. 9D or the media presentation description of FIG. 9E according to a user rating of the client 130. When the user rating of the client 130 is high (for example, when the client 130 is a paid user), the media presentation description of FIG. 9D is transmitted so that high quality video is freely reproduced, and when the user rating of the client 130 is low (for example, when the client 130 is a free user), the media presentation description of FIG. 9E is transmitted so that segments defined by the "SegmentCount"attribute are reproduced from a time defined by the "StartTime" attribute in high quality video.

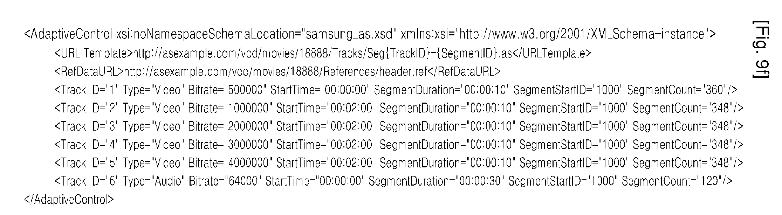

FIG. 9F illustrates a media presentation description when an advertisement is inserted into content. Referring to FIG. 9F, the media presentation description may include information about advertisement content and main content, which have different "StartTime" attributes. The media presentation description may include information about advertisement content, which is reproduced from "00:00:00" to "00:02:00" at a bit rate of "500000", and information about main content, which is reproduced from "00:02:00" at bit rates of "1000000", "2000000", "3000000", or "4000000". The media presentation description of FIG. 9F may be transmitted from the server 120 to the client 130 if the server 120 provides the advertisement content to the client 130 by encoding the advertisement content to have one bit rate, and provides the main content, which have a different "StartTime" attribute from the advertisement content, to the client 130 by encoding the main content in four different bit rates.

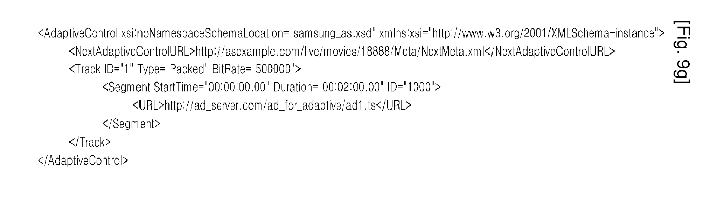

FIG. 9G illustrates a media presentation description including information about advertisement content, according to an exemplary embodiment. A server for providing main content and a server for providing advertisement content may be different. In other words, when the client 130 receives the main content from the server 120 of FIG. 5A and receives the advertisement content from a server other than the server 120, the media presentation description of FIG. 9G may include a URL of the advertisement content. As shown in FIG. 9G, the media presentation description may include the URL of the advertisement content that is encoded to have one quality.

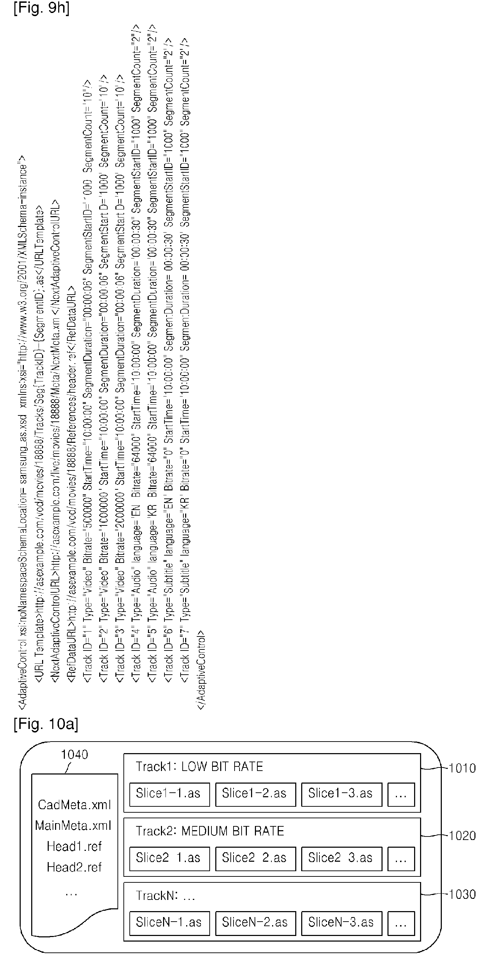

FIG. 9H illustrates a media presentation description including language and subtitle information, according to an exemplary embodiment. Referring to FIG. 9H, audio data may include information about multiple languages. The media presentation description may include information about audio data of multiple languages, wherein an "ID" attribute is "4" or "5", or information about subtitles of multiple languages, wherein the "ID" attribute is "6" or "7".

Since not only the audio data, but also the subtitle may be divided into a plurality of segments according to time, the audio data and the subtitle may be changed to audio data and a subtitle of another language during streaming.

Referring back to FIG. 5A, the client 130 requests the server 120 to transmit at least one of the plurality of media data, in operation 530. The client 130 selects at least one media data that is encoded to have a quality suitable for the streaming environment by referring to the information about the plurality of media data, and requests the server 120 for the selected at least one media data. The client 130 may transmit an HTTP request for requesting the server 120 to transmit a predetermined media data. The server 120 transmits the media data according to the request of the client 130. Alternatively, the server may transmit at least one segment generated by encoding content to have a predetermined quality and dividing the encoded content based on time, to the client 130. The server 120 may transmit the requested media data to the client 130 as an HTTP response to the HTTP request.

FIG. 5B is a flowchart for describing a streaming method according to another exemplary embodiment.

Referring to FIG. 5B, the client 130 requests the server 120 to transmit information about predetermined content, in operation 512, and receives the information about predetermined content from the server 120. The client 130 may transit an HTTP request for requesting the server 120 to transmit the information about predetermined content, and receive the information about predetermined content as an HTTP response to the HTTP request. The information about predetermined content may be included in an XML file.

In operation 522, the client 130 requests the server 120 to transmit information about a plurality of media data based on the information about predetermined content received in operation 512. The client 130 may request the server 120 for a media presentation description through the HTTP request, and receive the media presentation description as the HTTP response.

In operation 532, the client 130 requests a header of media data selected based on the information about a plurality of media data received in operation 522. At least one media data that is suitable to a streaming environment is selected from among the plurality of media data based on the information about the plurality of media data received in operation 522, and a header of the selected at least one media data is requested. The header of the selected at least one media data is requested by referring to the information about the plurality of media data received in operation 522. The server 120 transmits a file of the header of the selected at least one media data to the client 130 in response to the request of the client 130.

In operation 542, the client 130 requests the server 120 to transmit selected media data based on the information about the plurality of media data received in operation 522, and the header received in operation 532. The client 130 requests the server 120 to transmit at least one segment generated by encoding content to have a predetermined quality and dividing the encoded content based on time, and the server 120 transmits the requested at least one segment to the client 130.

FIGS. 10A through 10C each illustrate a plurality of media data according to exemplary embodiments. FIGS. 10A through 10C each illustrate the plurality of media data included in the server 120 to perform the streaming methods according to FIGS. 5A and 5B.

Referring to FIG. 10A, the server 120 may include a plurality of media data 1010 through 1030 generated by encoding one content to have a plurality of different qualities, for streaming that is adaptive to a streaming environment. "Track1" through "TrackN" denote the plurality of media data 1010 through 1030. Also, each of the plurality of media data 1010 through 1030 may include at least one segment generated by dividing each of the plurality of media data 1010 through 1030 based on time. "Slice1-1.as", "Slicel-2.as", "Slicel-3.as", "Slice2-1.as", "Slice2-2.as", "Slice2-3.as", "SliceN-1.as", "SliceN-2.as", and "SliceN-3.as" denote at least one segment.

The server 120 may include information 1040 required for the client 130 to access the plurality of media data 1010 through 1030. The server 120 may include a "CadMeta.xml" file as information about content, a "MainMeta.xml" file as information about the plurality of media data 1010 through 1030, and a "Head1.ref" file, a "Head2.ref" file, etc. as header files of the plurality of media data 1010 through 1030. Here, the "Head1.ref" file may be a header file of the "Track1", and the "Head2.ref" file may be a header file of the "Track2".

The "CadMeta.xml" file may be a CAD file according to the OIPF standard, and the "MainMeta.xml" file may be the media presentation description described above. Also, the "Head1.ref" and "Head2.ref" files are selective elements, and may not exist when headers are included in the plurality of media data 1010 through 1030.

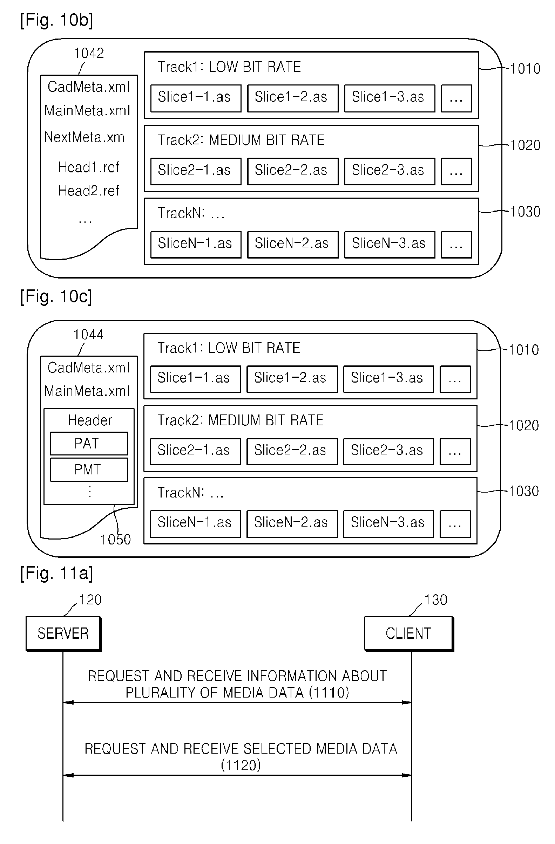

Referring to FIG. 10B, information 1042 required for the client 130 to access the plurality of media data 1010 through 1030 may further include a "NextMeta.xml" file. As described above, the "NextMeta.xml" file may be a media presentation description of a following content to be reproduced after current content. As described above, the media presentation description of the current content, i.e., the "MainMeta.xml" file, includes the URL of the media presentation description of the following content, and thus the client 130 may access the "NextMeta.xml" file based on the "MainMeta.xml" file.

Referring to FIG. 10C, header files of the plurality of media data 1010 through 1030 may exist in one header file 1050. Instead of existing for each of the plurality of media data 1010 through 1030, the header files may exist as one header file 1050 and may be included in information 1044 required to access the plurality of media data 1010 through 1030.

For example, when each of the plurality of media data 1010 through 1030 corresponds to an elementary stream, for example, an elementary stream according to MPEG-2, the header files of the plurality of media data 1010 through 1030 may be the header file 1050 including a program association table (PAT) and a program map table (PMT). At least one of the PAT and the PMT is separated from the plurality of media data 1010 through 1030 to prepare the header file 1050, and the media presentation description may include information pointing to the header file 1050. The information pointing to the header file 1050 may be URL information of the header file 1050 or information for specifying a packet including the header file 1050 in a MPEG-2 transport stream (TS). The header file 1050 including at least one of the PAT and the PMT is an initialization segment, and may be transmitted to the client 130 before segments including payload data, so as to initiate reproduction of the plurality of media data 1010 through 1030.

Referring back to operation 532 of FIG. 5B, the client 130 may obtain the information pointing to the header file 1050 by referring to the media presentation description, and may request the header file 1050 based on the information pointing the header file 1050. After requesting and receiving the header file 1050 based on the information pointing to the header file 1050, at least one of the plurality of media data 1010 through 1030 is selected based on at least one of the PAT and the PMT included in the header file 1050, and the selected at least one media data is requested from the server 120. The PAT and the PMT may be separated as the header file 1050 or included in the plurality of media data 1010 through 1030, but may include an entire list of elementary streams included in the plurality of media data 1010 through 1030 regardless of locations of the PAT and the PMT.

According to MPEG-2, packet IDs (PIDs) defined in the PAT and the PMT are different according to elementary streams. Accordingly, PIDs assigned to each of the plurality of media data 1010 through 1030 may be different. Alternatively, according to another exemplary embodiment, since the plurality of media data 1010 through 1030 generated by encoding one content to have different qualities are elementary streams of the same content, the same PID may be set.

When the plurality of media data 1010 through 1030 correspond to a plurality of elementary streams according to MPEG-2, each of segments included in the plurality of media data 1010 through 1030 may include at least one continuous packetized elementary stream (PES). However, one PES is included in one segment. In other words, one PES is not included in two different segments.

Since a plurality of media data are generated by encoding one content to have different qualities, presentation time stamps (PTSs) and/or decoding time stamps (DTSs) included in PESs of the plurality of media data may be aligned according to reproduction times. In other words, if an initial PES of first media data and an initial PES of second media data are content reproduced at the same time, a PTS and/or a DTS may be equally set.

Further, when the second media data is reproduced while reproducing the first media data by changing media data according to the streaming environment, the PTSs and/or the DTSs may be continuously aligned so that the first and second media data are continuously reproduced. In other words, when the second media data is reproduced while reproducing the first media data by changing media data, the PTS and/or the DTS of the last PES before the changing and the PTS and/or the DTS of the first PES after the changing may be continuously set.

The PTS and/or the DTS define a time stamp of video data. Accordingly, time stamps of the plurality of media data with respect to video data are aligned according to the reproduction times of the plurality of media data as described above. Such alignment of the time stamps based on the reproduction times may be equally applied to audio data. In other words, like the time stamps of the plurality of media data with respect to the video data, time stamps of the pieces media data with respect to the audio data may also be aligned according to the reproduction times for adaptive streaming.

FIG. 11A is a flowchart for describing a streaming method according to another exemplary embodiment.

Referring to FIG. 11A, the client 130 requests information about a plurality of media data to the server 120, in operation 1110. The client 130 may request a media presentation description to the server 120 via an HTTP request, and may receive the media presentation description as an HTTP response. The client 130 requests the server 120 for and receives the information about the plurality of media data generated by encoding one content to have a plurality of different qualities, so as to perform streaming that is adaptive to a streaming environment. The streaming method of FIG. 11A is different from the streaming method of FIG. 5A as the information about the plurality of media data is requested and received without requesting and receiving information about content.

In operation 1120, the client 130 requests the server 120 to transmit at least one of the plurality of media data. The client 130 selects and requests at least one media data that is encoded to have a quality suitable for the streaming environment by referring to the information about the plurality of media data, and receives the requested at least one media data from the server 120.

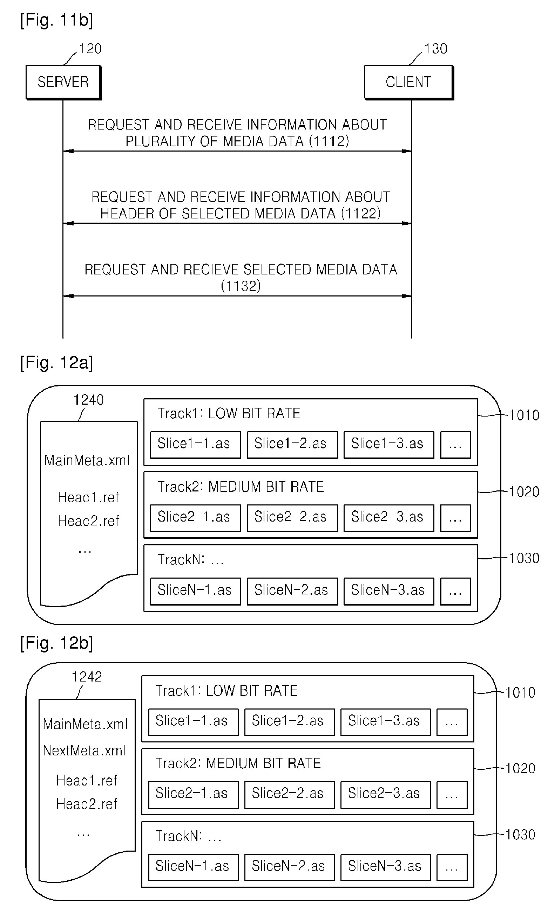

FIG. 11B is a flowchart for describing a streaming method according to another exemplary embodiment.

Referring to FIG. 11B, the client 130 requests the server 120 to transmit information about a plurality of media data and receives the information about the plurality of media data from the server 120 in response to the request, in operation 1112. The client 130 may request the server 120 for a media presentation description through an HTTP request, and receive the media presentation description as an HTTP response.

In operation 1122, the client 130 requests a header of selected media data based on the information about the plurality of media data received in operation 1112. The client 130 requests the header of media data selected according to a streaming environment by referring to the information about the plurality of media data received in operation 1112. In response to the request, the server 120 transmits a file including the header of the selected media data to the client 130.

In operation 1132, the client 130 requests the server 120 to transmit the media data selected based on the information about the plurality of media data received in operation 1112, and the header received in operation 1122. The client 130 requests the server 120 to transmit at least one segment generated by encoding content in a predetermined quality and dividing the encoded content based on time, and the server 120 transmits the requested at least one segment to the client 130.

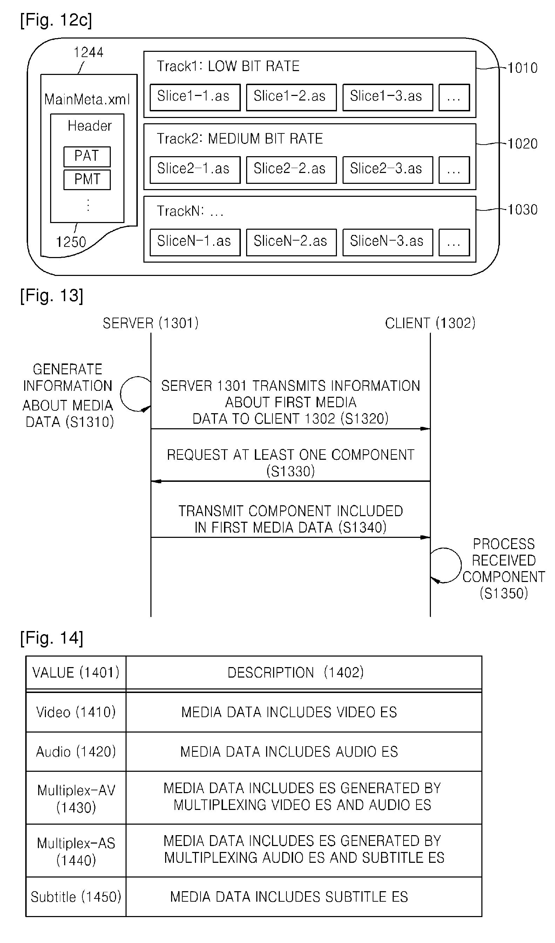

FIGS. 12A and 12C each illustrate a plurality of media data according to other exemplary embodiments. FIGS. 12A and 12B each illustrate the plurality of media data included in the server 120, which are used to perform the streaming methods of FIGS. 11A and 11B.

Referring to FIG. 12A, the server 120 may include the plurality of media data 1010 through 1030 generated by encoding one content to have the plurality of different qualities for streaming that is adaptive to a streaming environment, as shown in FIG. 10A.

Here, the plurality of media data 1010 through 1030 of FIG. 12A is different from the plurality of media data 1010 through 1030 of FIG. 10A in information 1240 required for the client 130 to access the plurality of media data 1010 through 1030, wherein the server 120 only includes information about the plurality of media data 1010 through 1030 and not information about content, unlike the exemplary embodiment of FIG. 10A. Here, the client 130 may receive the information about content from another entity instead of the server 120, and access the plurality of media data 1010 through 1030 included in the server 120 based on the received information about content.

Referring to FIG. 12B, information 1242 required for the client 130 to access the plurality of media data 1010 through 1030 may be prepared by further including a "NextMeta.xml" file to the information 1240 of FIG. 12A.

Referring to FIG. 12C, the header files of the plurality of media data 1010 through 1030 may exist in one header file 1250. The header files do not exist for each of the plurality of media data 1010 through 1030, but may be included in information 1244 required to access the plurality of media data 1010 through 1030, as one header file 1250. The header file 1250 corresponds to the header file 1050 of FIG. 10C.

FIG. 13 is a flowchart of an operating method in a data transmitting system, according to an exemplary embodiment.

The data transmitting system according to the current exemplary embodiment includes a server 1301, and a client 1302.

In operation S1310, the server 1301 generates at least one piece of media data including at least one component, and generates information about the media data. Hereinafter, for convenience of description, one piece of the media data generated by the server 1301 will be referred to as first media data, and an operating method of the data transmitting system will be described in terms of the first media data.

The server 1301 generates a plurality of components by encoding at least one content included in multimedia data to be provided. The server 1301 may generate the plurality of components that are of the same type by encoding a plurality of related different contents. For example, the server 1301 generates a first audio component by using an English audio content, and generates a second audio component by using a Korean audio content. The first audio component and the second audio component are of the same type, but are generated using different contents.

The server 1301 may generate the plurality of components by encoding the same content by using different methods. For example, as described with reference to FIGS. 1 through 12C, the plurality of components having different bitrates may be generated by encoding the input content to have different qualities.

The server 1301 generates the first media data including at least one component from among the generated components. The first media data may include all possible types of components, or alternatively, may include some types of components. For example, when the server 1301 generates a video component, an audio component, and a subtitle component, the first media data may include all of the video component, the audio component, and the subtitle component, or alternatively, may include only the video component. Throughout this specification, media data including all possible types of components is referred to as full-representation or complete-representation, and media data including only some types of components is referred to as partial-representation. Components included in the partial-representation may be processed together with components included in other partial-representation, and may be provided to a decoder.

Information about the first media data may include information indicating whether a component included in the first media data is provided together with a component included in second media data, that is, information indicating whether the first media data is the partial-representation.

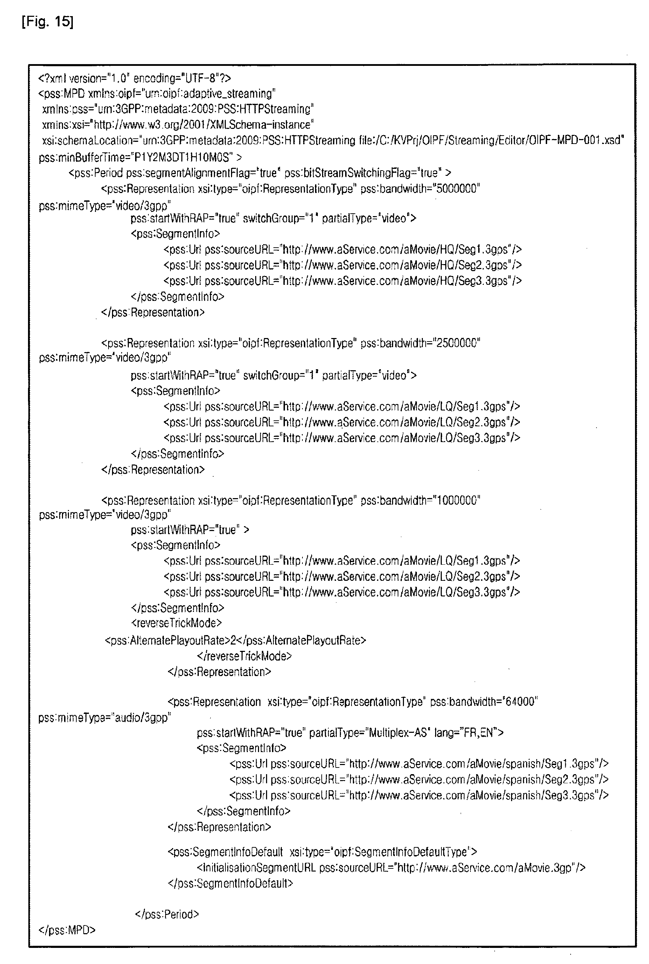

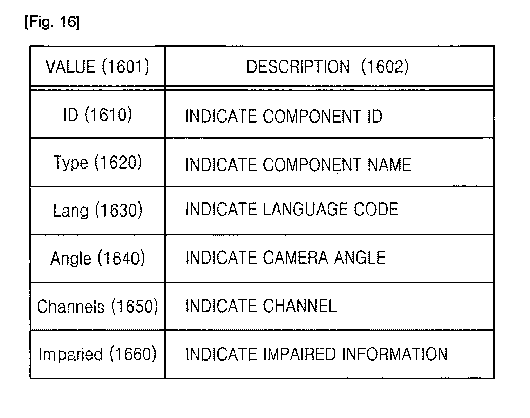

In addition, the information about the first media data may include component information that is information about at least one component included in the first media data. An example of the information about the first media data will be described later with reference to FIGS. 15, 17 and 18, and an example of the component information will be described later with reference to FIGS. 14 and 16.

In operation S1320, the server 1301 transmits the information about the first media data to the client 1302. When the information about the first media data is transmitted, the information may be included in a file (for example, a media presentation description) including information about a plurality of components generated by encoding one content to have different qualities.

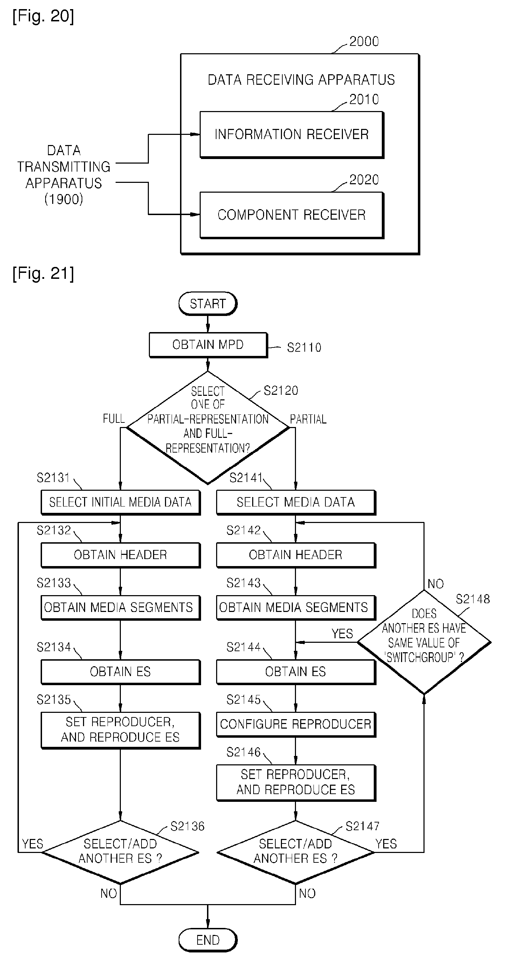

In operation s1330, the client 1302 requests the server 1301 for at least one component included in the first media data based on the information about the first media data. A detailed process of requesting and processing a component in the client 1302 will be described later with reference to FIG. 21.

The client 1302 selects at least one piece of media data from among a plurality of media data included in the media presentation description. The client 1302 determines whether a user wants partial-representation or full-representation. When there is no user's input, the full-representation may be recommended.

The client 1302 selects the first media data having a proper bit rate based on a user's request or a communication environment. Then, the client 1302 obtains header information of the first media data, and requests the server 1301 for at least one component included in the first media data. When the first media data includes a plurality of components, the client 1302 may selectively request the server 1301 for a desired component.

In operation S1340, the server 1301 transmits a component included in the first media data, requested by the client 1302, to the client 1302.

In operation S1350, the client 1302 processes the received component. When the first media data is partial-representation, and the user further selects the second media data, the client 1302 further receives and processes a component included in the second media data. The client 1302 outputs data desired by the user by combining the component included in the first media data and the component included in the second media data.

In related art methods, only full-representation is defined, but not partial-representation. That is, the server 1301 generates only media data including all types of components, that is, full-representation.

Thus, the client 1302 downloads and processes segments of one piece of media data at a time. Although this related art method is relatively simple and clear, this related art method has an important lack of flexibility. When the same type of components have different alternatives, the server 1301 needs to generate a plurality of media data corresponding to the respective alternatives. For example, when there are four video components generated by encoding the same video content in different bit rates, and three subtitles of different languages, the server 1301 needs to generate 12 media data whose number corresponds to the number of combinations of the components, which wastes a storage space of the server 1301. Since the server 1301 is not aware of a protocol or similarity between contents indicated by different URLs, although the server 1301 is optimized (for example, the server 1301 may generate segments of media data from an ES that is separately stored in a disk, in real time), it is not easy to use this related art method in a content delivery network (CDN).

However, according to the present exemplary embodiment, the server 1301 generates media data including only some types of components, that is, partial-representation, and thus the client 1302 may output desired data by checking desired media data, independently downloading segments of the media data and then combining components included in the media data. In this case, the server 1301 may generate only 4 media data including video components based on bit rates, and 3 media data including subtitles of three different languages. According to another exemplary embodiment, it is sufficient that the server 1301 generates only 4 media data including video components based on bit rates, and a subtitle component of a predetermined language, and 2 media data including subtitle components based on the remaining two languages. Thus, the sizes of a storage space and load required by the server 1301 may be remarkably reduced.

FIG. 14 is a table showing component information 1402, according to an exemplary embodiment.

FIG. 14 shows the component information 1402 based on a value 1401 of a 'PartialType' attribute of FIG. 15. For convenience of description, it is assumed that a component is included in the first media data.

When the value 1401 of the 'PartialType' attribute is 'Video' 1410, the first media data includes a video ES.

When the value 1401 of the 'PartialType' attribute is 'Audio' 1420, the first media data includes an audio ES.

When the value 1401 of the 'PartialType' attribute is 'Multiplex-AV' 1430, the first media data includes an ES generated by multiplexing a video ES and an audio ES.

When the value 1401 of the 'PartialType' attribute is 'Multiplex-AS' 1440, the first media data includes an ES generated by multiplexing an audio ES and a subtitle ES.

When the value 1401 of the 'PartialType' attribute is 'Subtitle' 1450, the first media data includes a subtitle ES.

FIG. 15 shows an example of information about media data, according to an exemplary embodiment.

FIG. 15 shows an example of MPD (Media Presentation Description) embodied as an XML file. Information about each piece of media data is included in a corresponding <pss:Representation> tag.

A 'xsi:type' attribute in the <pss:Representation> tag may be set as "oipf:RepresentationType". In this case, the <pss:Representation> tag may include a 'partialType' attribute, and a 'switchGroup' attribute.

The 'partialType' attribute indicates that corresponding media data is partial-representation. That is, each component (e.g., a video component, an audio component, a subtitle component, etc.) included in media data indicated by a <Representation> tag is downloaded from a server, and then is provided together with a component obtained from media data indicated by another <Representation> tag, to a decoder.

The 'partialType' attribute may have any one of the value 1401 of FIG. 14.

With regard to the 'switchGroup' attribute, a plurality of media data including components generated by encoding the same content to have different qualities have the same attribute value. However, a plurality of media data generated by encoding different contents of the same type (e.g., audio components of two languages) may have different attribute values.

The 'xsi:type' attribute in a <pss:SegmentInfoDefault> tag may be set as 'oipf:SegmentInfoDefaultType'. In this case, the <pss:SegmentInfoDefault> tag may include a 'pss:InitialisationSegmentURL' attribute.

The 'pss:InitialisationSegmentURL' attribute provides reference information about a header (i.e., an initialization segment) of media data. When the 'pss:InitialisationSegmentURL' attribute exists in the <pss:SegmentInfoDefault> tag in a <pss:Period> tag, the header provides metadata (e.g., moov of MP4, and PAT/PMT of TS) for describing samples of all types of media data (i.e., both partial-representation, and full-representation).

FIG. 16 is a table showing component information 1602, according to another exemplary embodiment.

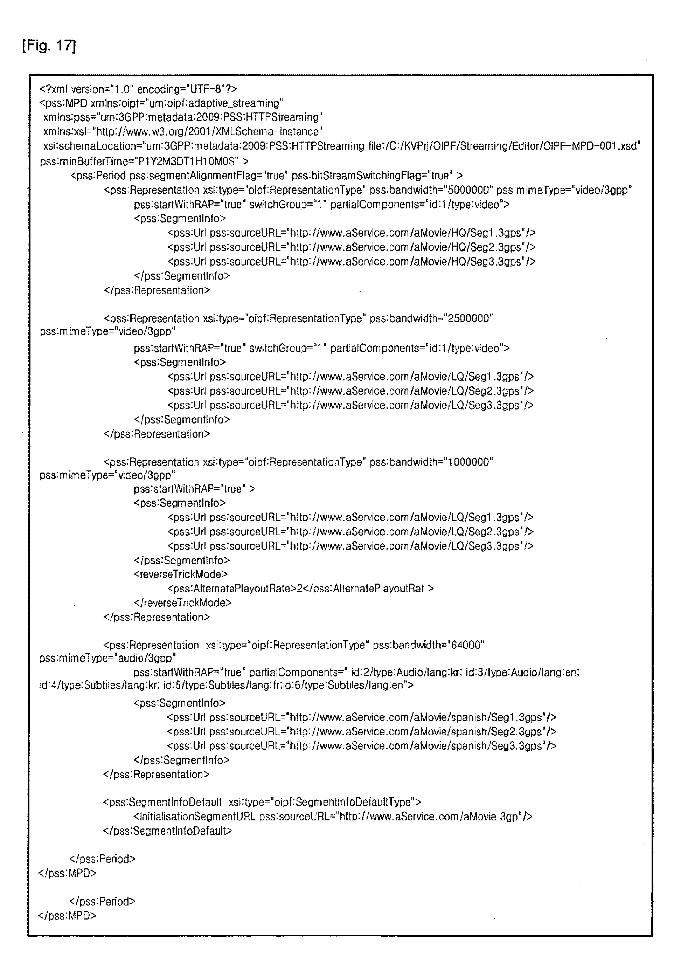

FIG. 16 shows the component information 1602 based on a value 1601 of a 'PartialComponent' attribute of FIG. 17. The 'PartialComponent' attribute includes an 'id' attribute 1610, a 'Type' attribute 1620, a 'Lang' attribute 1630, an 'Angle' attribute 1640, a 'Channels' attribute 1650, and an 'Impaired' attribute 1660.

The 'ID' attribute 1610 indicates an identifier of a component included in media data. A format of an identifier may be changed according to a container of the identifier. For example, a PID may be used for MPEG2-TS, and a TrackID may be used for MP4. In addition, a user may set a desired format of an identifier.

The 'Type' attribute 1620 indicates of a type of a component. For example, the component may be at least one of a video component, an audio component, and a subtitle component.

The 'Lang' attribute 1630 indicates a language code of an audio component or a subtitle component. The language code may be based on RCF 5646.

The 'Angle' attribute 1640 indicates a camera angle in a video component.

The 'Channels' attribute 1650 indicates an audio channel (e.g., a 5.1 channel, a 2.1 channel, or the like) in an audio component.

The 'Impaired' attribute 1660 indicates that data for impaired users is provided. For example, the 'Impaired' attribute 1660 may indicate that data for hearing-impaired users is provided.

FIG. 17 shows an example of information about media data, according to another exemplary embodiment.

FIG. 17 shows an example of MPD embodied as an XML file.

When a 'xsi:type' attribute in a <pss:Representation> tag is set as "oipf:RepresentationType", the <pss:Representation> tag may the following attributes that will now be described.

A 'partialComponents' attribute indicates that media data is 'partial-representation', but not 'full-representation'. That is, at least one component (e.g., Track/ES for providing individual video data, audio data, or subtitle data) included in media data corresponding to the <pss:Representation> tag is provided together with data to be downloaded from other media data, to a decoder.

The 'partialComponents' attribute describes each component included in the media data. A value of the 'partialComponents' attribute may be a string including a list in which information about components is divided by semicolons (or colons). The information about components includes the attributes shown in FIG. 16. However, an application takes charge of selecting a desired component and setting a decoder based on the selected component.

The 'partialComponents' attribute may be replaced by another attribute having the same function, such as a 'Partial' attribute, a 'Partial Type' attribute, a 'Component' attribute, or the like.

In FIG. 17, it is assumed that the 'partialComponents' attribute indicates whether corresponding media data is partial-representation. However, according to the exemplary embodiments, other attributes in FIG. 17 may indicate whether corresponding media data is partial-representation, or alternatively, a new attribute that is not shown in FIG. 17 may indicate whether corresponding media data is partial-representation.

With regard to a 'switchGroup' attribute, a plurality of media data including components generated by encoding the same content in different ways (e.g., components generated by encoding the same content to have different qualities) may have the same value. However, a plurality of media data generated by encoding different contents of the same type (e.g., audio components of two languages) may have different attribute values. Thus, a plurality of media data having different values of the 'switchGroup' attribute may be simultaneously reproduced by combining components included in the plurality of media data. However, a plurality of media data having the same value of the 'switchGroup' attribute may not be simultaneously reproduced.

The 'xsi:type' attribute in a <pss:SegmentInfoDefault> tag may be set as 'oipf:SegmentInfoDefaultType'. In this case, the <pss:SegmentInfoDefault> tag may include the following tags and attributes that will now be described.

A 'pss:InitialisationSegmentURL' attribute indicates reference information about a header (i.e., an initialization segment). When the 'pss:InitialisationSegmentURL' attribute exists in the <pss:SegmentInfoDefault> tag in a <pss:Period> tag, the header provides metadata (e.g., moov of MP4, and PAT/PMT of TS) for describing samples of all types of media data (i.e., both partial-representation, and full-representation).

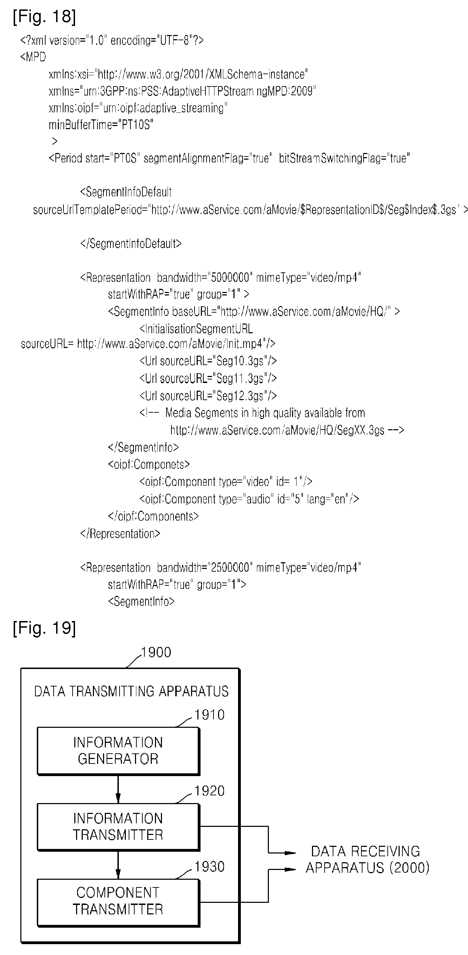

FIG. 18 shows an example of information about media data, according to another exemplary embodiment.

FIG. 18 shows an example of MPD embodied as an XML file. The information about each piece of media data is included in a corresponding <pss:Representation> tag in each XML file of the media data, and component information is included in a 'opif:component' attribute.

The <pss:Representation> tag may include a 'group' attribute. When the 'group' attribute has a value other than '0', corresponding media data does not have to be full-representation, and may be partial-representation. That is, at least one component (e.g., Track/ES for providing individual video data, audio data, or subtitle data) included in media data corresponding to the <pss:Representation> tag is provided together with data to be downloaded from other media data, to a decoder. In this case, a <Component> tag includes information about at least one components included in the <pss:Representation> tag. The <Component> tag may include the attributes shown in FIG. 16.

With regard to a 'group' attribute, a plurality of media data including at least one of the same component may have the same value. However, a plurality of media data including different components of the same type (e.g., audio components of different languages) may have different values.

FIG. 19 is a block diagram of a data transmitting apparatus 1900 according to an exemplary embodiment.

The data transmitting apparatus 1900 includes an information generator 1910, an information transmitter 1920, and a component transmitter 1930.

The information generator 1910 generates information about first media data including at least one component. The information generator 1910 may generate a file including information about a plurality of components generated by encoding one content to have different qualities, and may insert into the information about the first media data the file.

The information about the first media data includes information indicating whether at least one component is provided together with a component obtained from second media data to a decoder in a data receiving apparatus 2000, and component information about at least one component.

The component information includes type information about at least one component included in the first media data. The component information may further include at least one of identification information of at least one component, channel information, language code information and impaired information about an audio component, language information and impaired information about a subtitle component, and camera angle information about a video component.

The information about the first media data may further include information indicating whether each of a plurality of media data includes a component generated by encoding the same content. For example, when each of the first media data and the second media data includes a component generated by encoding the same content, the first media data and the second media data may each be set to have a predetermined field having the same value. In addition, when the first media data and the second media data include respective components generates by encoding different contents of the same type (e.g., audio components of different languages), the first media data and the second media data may be set to have respective predetermined fields having different values.

FIG. 20 is a block diagram of a data receiving apparatus 2000 according to an exemplary embodiment.

An information receiver 2010 receives information about first media data. Information about first media data includes information indicating whether at least one component is provided together with a component obtained from second media data.

A component receiver 2020 obtains at least one component based on the information about the first media data.

FIG. 21 is a flowchart of a method of receiving data, according to an exemplary embodiment.

In operation S2110, a MPD is obtained.

In operation S2120, when the MPD includes both partial-representation, and full-representation, any one of the partial-representation, and the full-representation based on a user's input. When there is no user's input, the partial-representation may be recommended.

When the partial-representation is selected, operation S2141 is performed. If not, operation S131 is performed.

In operation S2131, initial media data is selected based on metadata in the MPD. In general, the initial media data is selected based on a bit rate of media data.

In operation S2132, if a header exists in the media data, the header is obtained.

In operation S2133, media segments are obtained from the media data.

In operation S2134, an ES is obtained from the obtained header and media segment. In this case, a single audio stream and a single video stream are generally selected. If there are other alternatives, the ES may be selected from the alternatives.

In operation S2135, a reproducer is set in order to reproduce the selected ES, and the ES is reproduced.

In operation S2136, it is determined whether a user requests that the selected ES may be replaced by another ES in the header/media segments, or that another ES may be added, while the ES is reproduced. If there is no request, the ES selected in operation S2135 continues to be processed. If there is a request (e.g., request for converting a bit rate), requested full-representation is selected, and operation S2132 is performed.

In operation S2141, media data including a desired ES is selected based on metadata (e.g., a 'PartialComponent' attribute, or a 'Bandwidth' attribute) in the MPD.

In operation S2142, a header is obtained from a corresponding period.

In operation S2143, media segments are obtained from the media data.

In operation S2144, an ES is obtained from the obtained and media segment.

In operation S2145, a reproducer is configured in order to reproduce the selected ES by using information obtained from the header or the component information. When an ID field exists in a 'PartialComponent' attribute, it is possible to perform accurate mapping between streams in metadata extracted from a stream and header in the MPD. In this case, 'TrackID', or 'PID' may be transmitted to the reproducer without parsing the header.

In operation S2146, a reproducer is set in order to produce selected ES, and the ES is reproduced.

In operation S2147, it is determined whether a user requests that the selected ES may be replaced by another ES in the header/media segments, or that another ES may be added, while the ES is reproduced. If there is no request, the ES selected in operation S2146 continues to be processed. If there is a request (e.g., request for converting a bit rate), requested partial-representation is selected, and operation S2148 is performed.

In operation S2148, it is determined a value of a 'SwitchGroup' attribute of the selected partial-representation is the same as a value of a 'SwitchGroup' attribute of previous partial-representation. If the values are the same, operation S2144 is performed. If not, operation S2142 is performed.

In detail, when the user selects different partial-representation (e.g., media data including components with different bit rates) having the same value of the 'SwitchGroup' attribute, operation S2144 is performed. On the other hand, when the user selects or adds different partial-representation having different values of the 'SwitchGroup' attribute, operation S2141 is performed.

The invention can also be exemplarily embodied as computer readable codes on a computer readable recording medium.

For example, a streaming apparatus of a server and a streaming apparatus of a client according to exemplary embodiments may include a bus coupled to each unit of the apparatus 1300 of FIG. 13 and the apparatus of FIG. 14, and at least one processor connected to the bus. Also, the streaming apparatuses may further include a memory coupled to the at least one processor, so as to store a command, a received message, or a generated message, wherein the at least one processor is combined to the bus to perform the command.

The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

## Claims

1. A method of receiving data, the method comprising:
obtaining information about a plurality of media data which are different encoded versions of the same component included in a content, wherein the plurality of media data respectively correspond to a plurality of elementary streams, and wherein each of the plurality of media data includes a plurality of data segments, wherein the information includes a header url element referencing a header of the plurality of media data;
requesting and receiving the header of the plurality of media data based on the information, wherein the header of the plurality of media data comprises at least one of a program association table, PAT, or a program map table, PMT, relating to the plurality of elementary streams;
selecting and requesting at least one media data among the plurality of media data based on at least one of the PAT and the PMT included in the header file; and obtaining the at least one media data in response to the request.

2. The method of claim 1, wherein the at least one media data comprises video component, audio component and subtitle component.

3. The method of claim 1, wherein the information comprises component information that further comprises identification information of the at least one media data.

4. The method of claim 2, wherein the component information further comprises camera angle information about a video component included in the at least one media data.

5. The method of claim 2, wherein the component information further comprises at least one of channel information and language code information about an audio component included in the at least one media data.

6. The method of claim 2, wherein the component information further comprises language information about a subtitle component included in the at least one media data.

7. The method of claim 1, wherein the information further comprises information indicating whether each of the at least one media data comprise respective components generated by encoding the same content.

8. The method of claim 1, wherein the obtaining of the information comprises obtaining the information about at least one media data from a file comprising information about a plurality of components generated by encoding predetermined content to have different qualities.

9. An apparatus for receiving data, the apparatus comprising:
a processor,
non-transitory computer readable storage medium having recorded thereon a program for executing a method of receiving data, the method comprising:
obtaining information about a plurality of media data which are different encoded versions of the same component included in a content, wherein the plurality of media data respectively correspond to a plurality of elementary streams, and wherein each of the plurality of media data includes a plurality of data segments, wherein the information includes a header url element referencing a header of the plurality of media data;
requesting and receiving the header of the plurality of media data based on the information, wherein the header of the plurality of media data comprises at least one of a program association table, PAT, or a program map table, PMT, relating to the plurality of elementary streams;
selecting and requesting at least one media data among the plurality of media data based on at least one of the PAT and the PMT included in the header file;
obtaining the at least one media data in response to the request.

10. A non-transitory computer readable storage medium having recorded thereon a program for executing a method of receiving data, the method comprising:
obtaining information about a plurality of media data which are different encoded versions of the same component included in a content, wherein the plurality of media data respectively correspond to a plurality of elementary streams, and wherein each of the plurality of media data includes a plurality of data segments, wherein the information includes a header url element referencing a header of the plurality of media data;
requesting and receiving the header of the plurality of media data based on the information, wherein the header of the plurality of media data comprises at least one of a program association table, PAT, or a program map table, PMT, relating to the plurality of elementary streams;
selecting and requesting at least one media data among the plurality of media data based on at least one of the PAT and the PMT included in the header file; and
obtaining the at least one media data in response to the request.

## Patentansprüche

1. Verfahren für den Empfang von Daten, wobei das Verfahren Folgendes umfasst:
Erhalten von Informationen über eine Vielzahl von Mediendaten, die unterschiedlich codierte Versionen derselben Komponente sind, die in einem Inhalt enthalten ist, wobei die Vielzahl von Mediendaten jeweils einer Vielzahl von Elementarströmen entspricht und wobei sämtliche der Vielzahl von Mediendaten eine Vielzahl von Datensegmenten umfasst, wobei die Informationen ein Kopfdatensatz-URL-Element umfassen, das auf einen Kopfdatensatz der Vielzahl von Mediendaten Bezug nimmt;
Anfordern und Empfangen des Kopfdatensatzes der Vielzahl von Mediendaten basierend auf den Informationen, wobei der Kopfdatensatz der Vielzahl von Mediendaten mindestens eines von Folgendem umfasst: eine Programmassoziationstabelle (Program Association Table - PAT) oder eine Programmzuordnungstabelle (Program Map Table - PMT), die mit der Vielzahl von Elementarströmen in Beziehung steht;
Auswählen und Anfordern mindestens eines Mediendatenelements unter der Vielzahl von Mediendaten mindestens basierend auf der PAT und der PMT, die in der Kopfdatensatzdatei enthalten sind; und Erhalten des mindestens einen Mediendatenelements als Reaktion auf die Anfrage.

2. Verfahren nach Anspruch 1, wobei das mindestens eine Mediendatenelement eine Videokomponente, eine Audiokomponente und eine Untertitelkomponente umfasst.

3. Verfahren nach Anspruch 1, wobei die Informationen Komponenteninformationen umfassen, die ferner Identifikationsinformationen des mindestens einen Mediendatenelements umfassen.

4. Verfahren nach Anspruch 2, wobei die Komponenteninformationen ferner Kamerawinkelinformationen über eine Videokomponente umfassen, die in dem mindestens einen Mediendatenelement enthalten sind.

5. Verfahren nach Anspruch 2, wobei die Komponenteninformationen ferner mindestens Kanalinformationen oder Sprachcodeinformationen über eine Audiokomponente umfassen, die in dem mindestens einen Mediendatenelement enthalten sind.

6. Verfahren nach Anspruch 2, wobei die Komponenteninformationen ferner Sprachinformationen über eine Untertitelkomponente umfassen, die in dem mindestens einen Mediendatenelement enthalten sind.

7. Verfahren nach Anspruch 1, wobei die Informationen ferner Informationen umfassen, die anzeigen, ob jedes der mindestens einen Mediendatenelemente jeweilige Komponenten umfasst, die durch Codieren des gleichen Inhalts erzeugt werden.

8. Verfahren nach Anspruch 1, wobei das Erhalten der Informationen das Erhalten der Informationen über mindestens ein Mediendatenelement aus einer Datei umfasst, die Informationen über eine Vielzahl von Komponenten umfasst, die erzeugt werden, indem ein vorbestimmter Inhalt so codiert wird, dass er unterschiedliche Qualitäten aufweist.

9. Vorrichtung für den Empfang von Daten, wobei die Vorrichtung Folgendes umfasst:
einen Prozessor,
ein nicht-transitorisches computerlesbares Speichermedium, auf dem ein Programm zum Ausführen eines Verfahrens zum Empfangen von Daten aufgezeichnet ist, wobei das Verfahren Folgendes umfasst:
Erhalten von Informationen über eine Vielzahl von Mediendaten, die unterschiedlich codierte Versionen derselben Komponente sind, die in einem Inhalt enthalten ist, wobei die Vielzahl von Mediendaten jeweils einer Vielzahl von Elementarströmen entspricht und wobei sämtliche der Vielzahl von Mediendaten eine Vielzahl von Datensegmenten umfasst, wobei die Informationen ein Kopfdatensatz-URL-Element umfassen, das auf einen Kopfdatensatz der Vielzahl von Mediendaten Bezug nimmt;
Anfordern und Empfangen des Kopfdatensatzes der Vielzahl von Mediendaten basierend auf den Informationen, wobei der Kopfdatensatz der Vielzahl von Mediendaten mindestens eines von Folgendem umfasst: eine Programmassoziationstabelle, PAT, oder eine Programmzuordnungstabelle, PMT, die mit der Vielzahl von Elementarströmen in Beziehung steht;
Auswählen und Anfordern mindestens eines Mediendatenelements unter der Vielzahl von Mediendaten mindestens basierend auf der PAT und der PMT, die in der Kopfdatensatzdatei enthalten sind;
Erhalten des mindestens einen Mediendatenelements als Reaktion auf die Anfrage.

10. Nicht-transitorisches computerlesbares Speichermedium, auf dem ein Programm zum Ausführen eines Verfahrens zum Empfangen von Daten aufgezeichnet ist, wobei das Verfahren Folgendes umfasst:
Erhalten von Informationen über eine Vielzahl von Mediendaten, die unterschiedlich codierte Versionen derselben Komponente sind, die in einem Inhalt enthalten ist, wobei die Vielzahl von Mediendaten jeweils einer Vielzahl von Elementarströmen entspricht und wobei sämtliche der Vielzahl von Mediendaten eine Vielzahl von Datensegmenten umfasst, wobei die Informationen ein Kopfdatensatz-URL-Element umfassen, das auf einen Kopfdatensatz der Vielzahl von Mediendaten Bezug nimmt;
Anfordern und Empfangen des Kopfdatensatzes der Vielzahl von Mediendaten basierend auf den Informationen, wobei der Kopfdatensatz der Vielzahl von Mediendaten mindestens eines von Folgendem umfasst: eine Programmassoziationstabelle, PAT, oder eine Programmzuordnungstabelle, PMT, die mit der Vielzahl von Elementarströmen in Beziehung steht;
Auswählen und Anfordern mindestens eines Mediendatenelements unter der Vielzahl von Mediendaten mindestens basierend auf der PAT und der PMT, die in der Kopfdatensatzdatei enthalten sind; und
Erhalten des mindestens einen Mediendatenelements als Reaktion auf die Anfrage.

## Revendications

1. Un procédé de réception de données, le procédé comprenant :
l'obtention d'informations relatives à une pluralité de données multimédias qui sont des versions codées différentes du même composant inclus dans un contenu, où la pluralité de données multimédias correspondent respectivement à une pluralité de flux élémentaires, et où chaque donnée de la pluralité de données multimédias comprend une pluralité de segments de données, où les informations comprennent un élément url d'entête faisant référence à un entête de la pluralité de données multimédias,
la demande et la réception de l'entête de la pluralité de données multimédias en fonction des informations, où l'entête de la pluralité de données multimédias contient au moins une table parmi une table d'association de programmes, PAT, ou une table de carte de programmes, PMT, relative à la pluralité de flux élémentaires,
la sélection et la demande d'au moins une donnée multimédia parmi la pluralité de données multimédias en fonction d'au moins une table parmi la PAT et la PMT incluse dans le fichier d'entête, et l'obtention de la au moins une donnée multimédia en réponse à la demande.

2. Le procédé selon la Revendication 1, où la au moins une donnée multimédia comprend un composant vidéo, un composant audio et un composant de sous-titre.

3. Le procédé selon la Revendication 1, où les informations comprennent des informations de composant qui comprennent en outre des informations d'identification de la au moins une donnée multimédia.

4. Le procédé selon la Revendication 2, où les informations de composant comprennent en outre des informations d'angle de caméra relatives à un composant vidéo inclus dans la au moins une donnée multimédia.

5. Le procédé selon la Revendication 2, où les informations de composant comprennent en outre au moins des informations parmi des informations de canal et des informations de code de langue relatives à un composant audio inclus dans la au moins une donnée multimédia.

6. Le procédé selon la Revendication 2, où les informations de composant comprennent en outre des informations de langue relatives à un composant de sous-titre inclus dans la au moins une donnée multimédia.

7. Le procédé selon la Revendication 1, où les informations comprennent en outre des informations indiquant si chaque donnée des au moins une données multimédias comprend des composants respectifs générés par le codage du même contenu.

8. Le procédé selon la Revendication 1, où l'obtention des informations comprend l'obtention des informations relatives à au moins une donnée multimédia à partir d'un fichier contenant des informations relatives à une pluralité de composants générés par le codage d'un contenu prédéterminé de façon à présenter différentes qualités.

9. Un appareil de réception de données, l'appareil comprenant :
un processeur,
un support à mémoire lisible par ordinateur non transitoire possédant enregistré sur celui-ci un programme destiné à l'exécution d'un procédé de réception de données, le procédé comprenant :
l'obtention d'informations relatives à une pluralité de données multimédias qui sont des versions codées différentes du même composant inclus dans un contenu, où la pluralité de données multimédias correspondent respectivement à une pluralité de flux élémentaires, et où chaque donnée de la pluralité de données multimédias comprend une pluralité de segments de données, où les informations comprennent un élément url d'entête faisant référence à un entête de la pluralité de données multimédias,
la demande et la réception de l'entête de la pluralité de données multimédias en fonction des informations, où l'entête de la pluralité de données multimédias comprend au moins une table parmi une table d'association de programmes, PAT, ou une table de carte de programmes, PMT, relative à la pluralité de flux élémentaires,
la sélection et la demande d'au moins une donnée multimédia parmi la pluralité de données multimédias en fonction de la au moins une table parmi la PAT et la PMT incluse dans le fichier d'entête,
l'obtention de la au moins une donnée multimédia en réponse à la demande.

10. Un support à mémoire lisible par ordinateur non transitoire possédant enregistré sur celui-ci un programme destiné à l'exécution d'un procédé de réception de données, le procédé comprenant :
l'obtention d'informations relatives à une pluralité de données multimédias qui sont des versions codées différentes du même composant inclus dans un contenu, où la pluralité de données multimédias correspondent respectivement à une pluralité de flux élémentaires, et où chaque donnée de la pluralité de données multimédias comprend une pluralité de segments de données, où les informations comprennent un élément url d'entête faisant référence à un entête de la pluralité de données multimédias,
la demande et la réception de l'entête de la pluralité de données multimédias en fonction des informations, où l'entête de la pluralité de données multimédias comprend au moins une table parmi une table d'association de programmes, PAT, ou une table de carte de programmes, PMT, relative à la pluralité de flux élémentaires,
la sélection et la demande d'au moins une donnée multimédia parmi la pluralité de données multimédias en fonction de la au moins une table parmi la PAT et la PMT incluse dans le fichier d'entête, et
l'obtention de la au moins une donnée multimédia en réponse à la demande.
